# EUROPÄISCHE PATENTSCHRIFT

(11) **EP 0 883 091 B1**
(45) Veröffentlichungstag und Bekanntmachung des Hinweises auf die Patenterteilung: **03.03.2004**
(21) Anmeldenummer: 98250190.0
(22) Anmeldetag: 02.06.1998
(51) Int. Cl.: G07C 9/00, G11B 23/00, G11B 23/28

(54) **Einlassdokument**
Admission document
Document d'accès

(30) Priorität: 06.06.1997 DE 29710282 U
(43) Veröffentlichungstag der Anmeldung: 09.12.1998
(73) Patentinhaber: c.u.b.a. Media und Entertainment Aktiengesellschaft, 23730 Neustadt/Holstein (DE)
(72) Erfinder: Lindinger, Werner, 82211 Herrsching (DE); Wright, Johnny, 32819 Orlando (US)

(56) Entgegenhaltungen:
- EP-A- 0 514 156
- DE-A- 4 310 576
- DE-U- 29 616 619
- US-A- 4 868 373
- US-A- 5 265 916
- PATENT ABSTRACTS OF JAPAN vol. 016, no. 218 (P-1357), 21. Mai 1992 (1992-05-21) & JP 04 040586 A (NIPPON TELEGR & TELEPH CORP), 10. Februar 1992 (1992-02-10)

## Beschreibung

Die Erfindung bezieht sich auf ein Einlaßdokument für Veranstaltungen aller, wobei das Einlaßdokument als Compact Disc (CD) ausgebildet ist (DE-A-4310576).

Es sind bereits eine Vielzahl von Einlaßdokumenten bekannt, die als Eintrittskarten für Sport- und Musikveranstaltungen, für Theatervorstellungen oder Ausstellungsbesuchen oder dgl. in großer Material- und Formenvielfalt verwendet werden. Die Entwertung der Eintrittskarten erfolgt in der Regel durch das Abtrennen eines besonderen Abschnittes, aber auch durch Einreißen der Eintrittskarte oder durch Abstempeln. Nachteilig ist bei diesen bekannten Einlaßdokumenten, daß diese nach der Entwertung keine weitere Verwendungsmöglichkeit bieten, außer z,B als Lesezeichen, wenn es eine besondere Gestaltung aufweist.

EP-A-0 429 976 beschreibt eine Telefonkarte aus Kunststoff, die vor Gebrauch durch Abtrennen einer Ecke entwertet wird und erst dann benutzt werden kann.

Der Erfindung liegt die Aufgabe zugrunde, ein Einlaßdokument in Form einer CD zu schaffen, das vor und nach der Entwertung, z.B. beim Besuch einer Veranstaltung, eine zusätzliche, sinnvolle Funktion aufweist bzw. behält.

Die Lösung dieser Aufgabe ergibt sich aus den Merkmalen des Anspruches 1. Das Entwertungselement ist in bevorzugter Ausführungsform als am Außenrand der CD z.B. durch Minderung der Materialstärke gebildeten, leicht abtrennbaren Abschnitt, insbesondere als Eintrittskarte, gebildet.

Die Gestaltung einer mit Musik oder sonstigen Informationen bespielten CD, z.B als Eintrittskarte mit Abtrennabschnitt, schafft ein langlebiges und wiederholt verwendbares Produkt. Das Einlaßdokument kann mit Informationen ausgestattet werden, die auch nach der Entwertung noch ausgelesen werden können und den Wert als Informationsquelle erhalten. Die sehr individuelle Einspeicherung von Informationen zu bzw. über die Veranstaltung schafft darüberhinaus die Möglichkeit, eine unkomplizierte Vorbereitung auf die Veranstaltung durchzuführen.

Weitere vorteilhafte Ausgestaltungen der Erfindung ergeben sich aus den Unteransprüchen.

Die Erfindung ist nachfolgend anhand von in den Zeichnungen dargestellten Ausführungsbeispielen eines als Eintrittskarte dienenden Einlaßdokuments näher erläutert. Es zeigen:
- Fig. 1: eine schematische Darstellung der Draufsicht auf eine erste Ausführungsform der Eintrittskarte,
- Fig. 2: eine Darstellung der Draufsicht auf die erste Ausführungsform der Eintrittskarte mit aufgebrachten Informationen zur Veranstaltung,
- Fig. 3: eine schematische Darstellung der Draufsicht auf eine zweite Ausführungsform der Eintrittskarte und
- Fig. 4: eine schematische Darstellung der Draufsicht auf eine dritte Ausführungsform der Eintritsskarte.

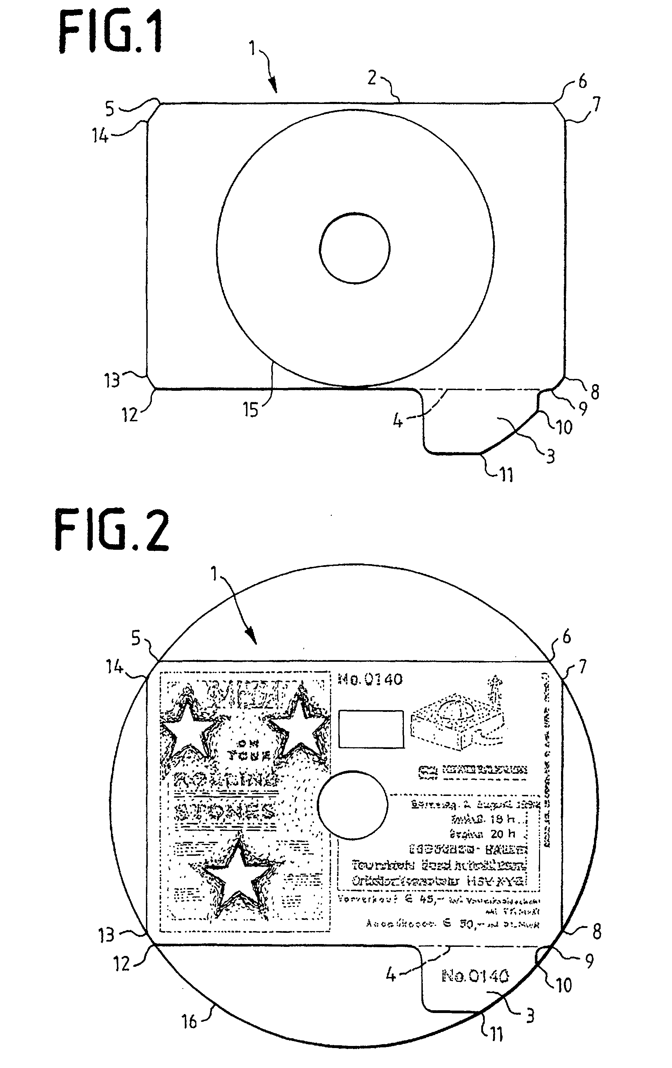

Die Fig. 1 zeigt eine erste Ausführungsform einer ein Einlaßdokument bildenden Eintrittskarte in Form einer CD 1 mit einem abtrennbaren Abschnitt 3 am Außenrand 2.

Der abtrennbare Abschnitt 3, welcher als Abtrennelement bei der Einlaßkontrolle der Veranstaltung dient und die Eintrittskarte nach dem Entfernen als solche ungültig macht, wird durch mechanische Bearbeitung bzw. Schwächung des Materialquerschnitts, z.B. durch das Fräsen einer Nut 4 auf einer oder auch auf beiden Seiten der CD, erzeugt. Anstelle von Fräsen können auch andere geeignete Technologien angewendet werden, z.B. Perforieren. Durch die mechanische Bearbeitung muß der Materialquerschnitt so geschwächt werden, daß der Transport der Eintrittskarten, z.B. durch Versand, noch gewährleistet wird, ohne daß die Gefahr eines unbeabsichtigten Abtrennens des Abtrennelementes 3 besteht. Bei der Einlaßkontrolle und Entwertung der Eintrittskarte muß ein leichtes Abtrennen jedoch gewährleistet sein.

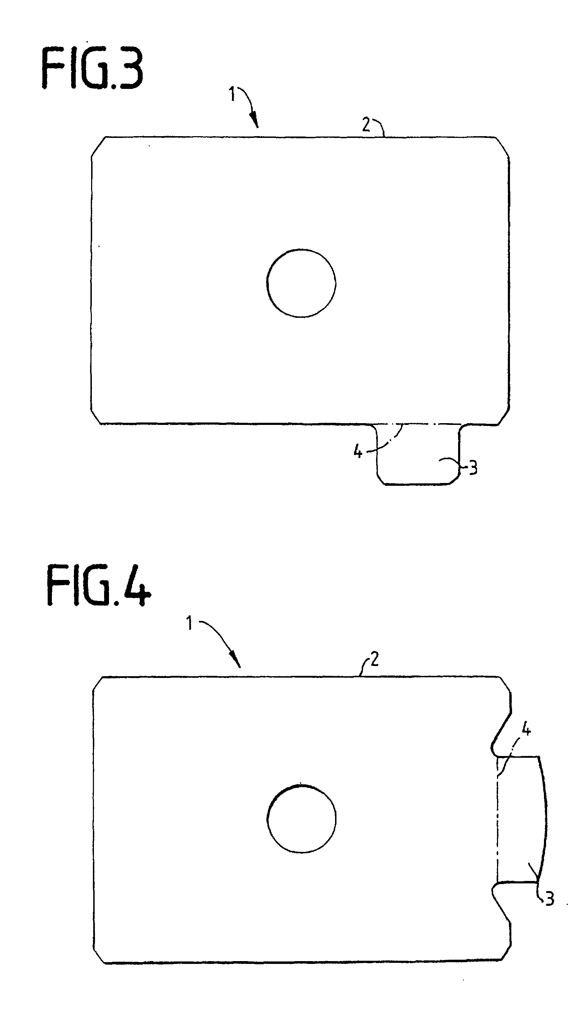

Weitere Ausführungsbeispiele der Anordnung und Ausformung des abtrennbaren Abschnitts 3 zeigen Fig.3 und 4.

Die Abmessungen der CD 1, eingeschlossen der abtrennbare Abschnitt 3, sind immer so gewählt, daß die äußeren Begrenzungspunkte 5 bis 14 auf dem umschriebenen Kreis 16 (Fig. 2) vom genormten Durchmesser handelsüblicher CD liegen.

In Fig. 2 ist eine Ausführungsform für die Gestaltung der Oberfläche der CD als Eintrittskarte gezeigt. Die Oberfläche wird dazu genutzt, allgemeine Veranstaltungshinweise zu geben, wie Art der Veranstaltung, Beginn, Preis, Sponsoren und dgl..

Die Informationen auf der CD sind auf dem inneren Kreis 15 (Fig. 1) gespeichert und können nach dem Entwerten der Eintrittskarte durch Entfernen des Abschnitts 3 ohne Beeinträchtigung ausgelesen werden.

Es ist weiterhin eine fortlaufende Numerierung der CD vorgesehen (Fig. 2), um eine Kontrolle über verkaufte CD zu erhalten.

Zur Verwendung der CD an Veranstaltungsorten mit elektronischer Einlaßkontrolle ist die CD mit geeigneten codierten Informationen ausgestattet, die durch ein Lesegerät elektronisch ausgelesen und gegebenenfalls gelöscht werden. Die codierten Informationen können an beliebiger Stelle im inneren oder umschriebenen Kreis 15, 16 und/oder auf dem abtrennbaren Abschnitt 3 aufgebracht sein. Nach dem Auslesen der Codierung kann der abtrennbare Abschnitt 3 durch eine entsprechende Vorrichtung am Lesegerät auch mechanisch abgetrennt werden.

Somit ist es auch möglich, die Eintrittskarte zur Kontrolle der Anzahl der in einem bestimmten Zeitraum in einem zu kontrollierenden Bereich befindlichen Personen zu verwenden, um damit eine kontrollierte Mengenbegrenzung pro Zeiteinheit zu ermöglichen.

## Patentansprüche

1. Einlaßdokument für Veranstaltungen aller Art, wobei das Einlaßdokument als Compact Disc (CD) (1) ausgebildet ist, **dadurch gekennzeichnet, daß** zusätzlich ein Entwertungselement als abtrennbarer Abschnitt (3) an der geformten und bespielten CD (1) angeordnet ist, wobei äußere Begrenzungspunkte (5 bis 14) der CD (1) einschließlich des Abschnitts (3) auf einem umschriebenen Kreis (16) vom Durchmesser handelsüblicher CD's liegen, derart, daß die CD (1) nach der Entwertung durch Entfernen des Abschnitts (3) ohne Beeinträchtigung abspielbar ist.

2. Einlaßdokument nach Anspruch 1, **dadurch gekennzeichnet, daß** der Abschnitt (3) am Außenrand (2) der CD (1) durch Minderung der Materialstärke leicht abtrennbar an der CD (1) angeordnet ist.

3. Einlaßdokument nach Anspruch 2, **dadurch gekennzeichnet, daß** die CD (1) in einem definierten Bereich mindestens auf einer Seite eine Nut (4) aufweist, die den abtrennbaren Abschnitt (3) festlegt.

4. Einlaßdokument nach einem der Ansprüche 1 bis 3, **dadurch gekennzeichnet, daß** auf der CD (1) und/oder dem Abschnitt (3) codierte Informationen zum elektronischen Auslesen durch ein Lesegerät an einer Einlaßkontrolle aufgebracht sind.

## Claims

1. Admission pass for all kinds of events. The said admission pass comes as a compact disc (CD) (1), defined by an extra removable authentication element in the form of a removable section (3) connected to the CD (1); external delimitation points (5 to 14) separating the CD (1) from the removable section (3) constitute a circle (16), the diameter of which is equivalent to that of commercially available CDs, in such a way that enables the use of the CD (1) after the removable section (3) has been removed upon admission.

2. Admission pass according to claim 1, defined by the fact that the removable section (3) on the outer edge of the CD (1) is easily removable thanks to thinner material.

3. Admission pass according to claim 2, defined by the fact that the CD (1) has a groove (4) in a specific area on at least one side, delimiting the removable section (3).

4. Admission pass according to claims 1 to 3, defined by the fact that the CD (1) and/or removable section (3) contain coded information which is extractable with an electronic reader, thus enabling to control admissions.

## Revendications

1. Titre d'admission pour des manifestations en tous genres, ledit titre d'admission se présentant comme un disque compact (CD) (1), **caractérisé par** un élément de validation supplémentaire sous la forme d'une section détachable (3) rattachée au CD (1), où des points de délimitation externes (5 à 14) séparant le CD (1) et la section détachable (3) forment un cercle (16) dont le diamètre correspond à celui des CD habituellement disponibles dans le commerce, de telle sorte que le CD (1) peut être utilisé sans problème après la validation, autrement dit après la suppression de la section détachable (3).

2. Titre d'admission selon la revendication 1, **caractérisé par le fait que** la section détachable (3) sur le bord extérieur du CD (1) est facile à détacher en raison de l'épaisseur moins importante du matériau.

3. Titre d'admission selon la revendication 2, **caractérisé par le fait que** le CD (1) présente dans une zone définie une rainure (4) sur au moins un des côtés, délimitant la section détachable (3).

4. Titre d'admission selon les revendications 1 à 3, **caractérisé par le fait que** le CD (1) et/ou la section détachable (3) contiennent des informations codées extractibles par le biais d'un lecteur électronique permettant de contrôler les paramètres d'admission.
